# EUROPÄISCHE PATENTSCHRIFT

(11) **EP 0 897 187 B1**
(45) Veröffentlichungstag und Bekanntmachung des Hinweises auf die Patenterteilung: **19.04.2006**
(21) Anmeldenummer: 98114196.3
(22) Anmeldetag: 29.07.1998
(51) Int. Cl.: H01H 71/08, H02B 1/20

(54) **Schaltgerätesystem mit modular aufgebautem Energiebus**
Switch assembly with modular powerbus
Ensemble d'interrupteurs avec bus de puissance modulaire

(30) Priorität: 11.08.1997 DE 19734709
(43) Veröffentlichungstag der Anmeldung: 17.02.1999
(73) Patentinhaber: SIEMENS AKTIENGESELLSCHAFT, 80333 München (DE)
(72) Erfinder: Kaaden, Peter, 92421 Schwandorf (DE)

(56) Entgegenhaltungen:
- EP-A- 0 768 728
- DE-A- 3 032 228
- DE-U- 29 518 559

## Beschreibung

Die Erfindung bezieht sich auf Schaltgerätesystem mit mindestens zwei Schaltgeräten zum Betrieb über dieselbe Energieeinspeisung.

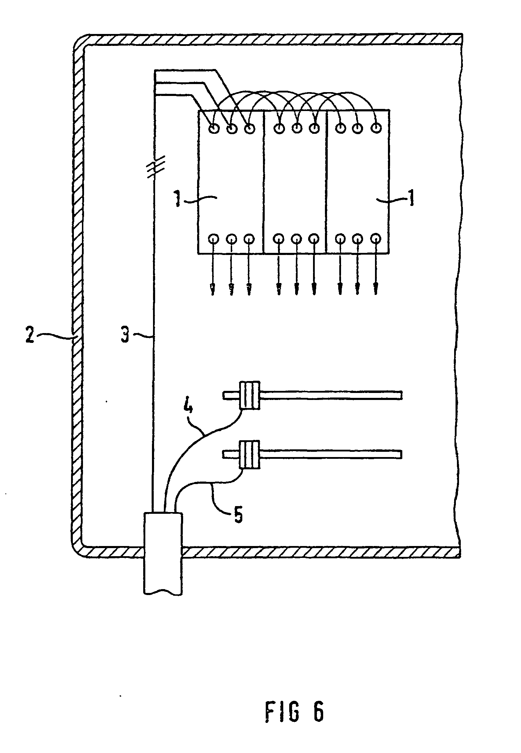

Ein gattungsgemäßes Schaltgerätesystem bekannter Ausführung wird anhand der FIG 6 kurz erläutert. Hier sind drei Schaltgeräte 1 in einem Schaltschrank bzw. einem Schaltkasten 2 angeordnet. Die Energieeinspeisung erfolgt über ein Kabel mit drei Anschlußleitungen 3, einem Neutralleiter 4 und einem Schutzleiter 5. Die elektrische Energieversorgung der Schaltgeräte 1 erfolgt durch Anschluß der drei Anschlußleitungen 3 an eines der drei Schaltgeräte 1, von dem ausgehend jeweils zu dem nebenliegenden Schaltgerät 1 Drahtverbindungen hergestellt werden. Der Anschluß der Verbraucher erfolgt über die in FIG 6 unten liegenden Anschlußklemmen der Schaltgeräte 1. Der Neutralleiter 4 und der Schutzleiter 5 werden an entsprechende Schienen im Schaltschrank bzw. Schaltkasten 2 angeklemmt.

Ein solches Schaltgerätsystem ist z.B. aus dem Dokument EP-A-0 768 728 bekannt.

Der Erfindung liegt die Aufgabe zugrunde, ein Schaltgerätesystem der obengenannten Art mit einer einfachen Adaptierung und Kontaktierung der Schaltgeräte zu schaffen.

Die Aufgabe wird dadurch gelöst, daß jedem Schaltgerät eine Anschluß- und Verteileinheit zugeordnet ist, die jeweils einen Verteilschienen-Abschnitt aufweist, über den das zugehörige Schaltgerät mit der Energieeinspeisung elektrisch verbindbar ist, wobei die Verteilschienen-Abschnitte zu einer durchgehenden Verteilerschiene verbunden sind und die Energieeinspeisung mindestens an einem der Verteilschienen-Abschnitte anschließbar ist.

Zur Kontaktierung ist vorteilhafterweise jeder Verteilschienen-Abschnitt mit mindestens einer Anschlußklemme der Anschluß- und Verteileinheit elektrisch verbunden. Zur dreiphasigen Energieeinspeisung hat sich es sich als zweckmäßig erwiesen, wenn die Anschluß- und Verteileinheit dreiphasig mit Anschlußklemmen und drei Verteilschienen-Abschnitten zum Anschluß eines Drehstromsystems ausgeführt ist.

Eine besonders einfache Montage wird ermöglicht, wenn die elektrischen Verbindungen der Verteilschienen-Abschnitte als Steckverbindungen ausgeführt sind.

Weitere vorteilhafte Ausgestaltungen der Erfindung sind den Unteransprüchen zu entnehmen.

Ein Ausführungsbeispiel der Erfindung wird im folgenden anhand einer Zeichnung näher erläutert. Es zeigen:
- FIG 1: einen prinzipiellen Aufbau eines erfindungsgemäßen Schaltgerätesystems,
- FIG 2: einen Anschluß- und Verteilbaustein für drei Anschlußleitungen,
- FIG 3: einen Anschluß- und Verteilbaustein zum Anschluß eines Neutral- und eines Schutzleiters,
- FIG 4: einen Block aus modular aus mehreren Anschluß- und Verteilbausteinen gemäß FIG 2 und 3 aufgebauten Block zur Kontaktierung und Adaptierung mehrerer Schaltgeräte,
- FIG 5: eine Explosionsdarstellung eines dreiphasigen Anschluß- und Verteilbausteins,
- FIG 6: einen prinzipiellen Aufbau des Energieanschlusses mehrerer Schaltgeräte in bekannter Art.

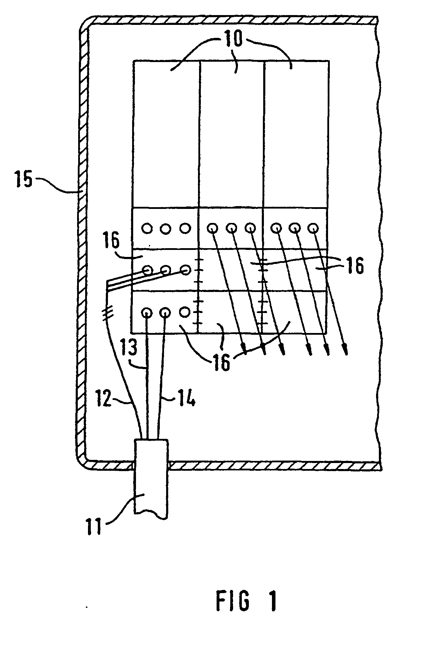

In FIG 1 ist ein erfindungsgemäßes Schaltgerätesystem aus mehreren Schaltgeräten 10 mit der Einspeisung über eine Energieleitung 11 mit drei Anschlußleitungen 12 sowie einem Neutral- 13 und einem Schutzleiter 14 in einer Prinzipdarstellung gezeigt. Die in einem Schaltschrank bzw. Schaltkasten 15 angeordneten Schaltgeräte 10 werden über unterhalb liegende Anschluß- und Verteileinheiten 16 an die Energieleitung 11 angeschlossen. Die Anschluß- und Verteileinheiten sind als an die Schaltgeräte 10 ankoppelbare Anschluß- und Verteilbausteine 16 ausgeführt, wobei zwischen Anschluß- und Verteilbausteinen 16 zum Anschluß der drei Anschlußleitungen 12 und solchen für den Neutral- 13 und Schutzleiter 14 unterschieden wird. Die elektrische Kopplung der Anschluß- und Verteilbausteine 16 ergibt durchgehende Verteilerschienen, an die die Energieleitung 11 an irgendeiner Stelle, d.h. nur über einen der Anschluß- und Verteilbausteine 16 angeschlossen werden muß.

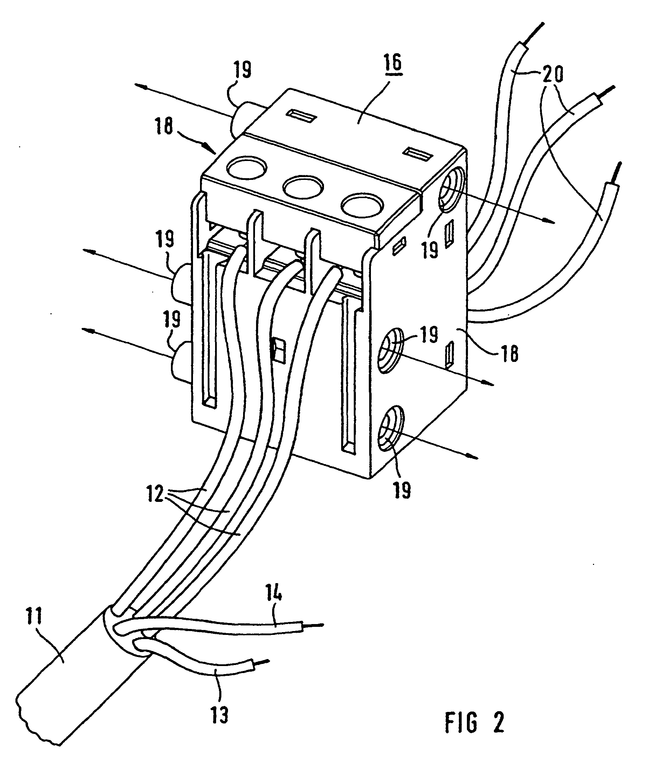

FIG 2 zeigt einen Anschluß- und Verteilbaustein 16, an den die drei Anschlußleitungen 12 der Energieleitung 11 angeschlossen sind. Der Anschluß- und Verteilbaustein 16 weist an seinen beiden Seitenwänden 18 Öffnungen 19 zur elektrischen Kopplung mit nebenliegenden Anschluß- und Verteilbausteinen 16 auf, wodurch sich die oben erwähnten Verteilerschienen herstellen lassen. Die an der Rückseite des Anschluß- und Verteilbausteins 16 abgehenden Verbindungsleitungen 20 dienen zum Anschluß an das zugeordnete Schaltgerät 10 (siehe auch FIG 1).

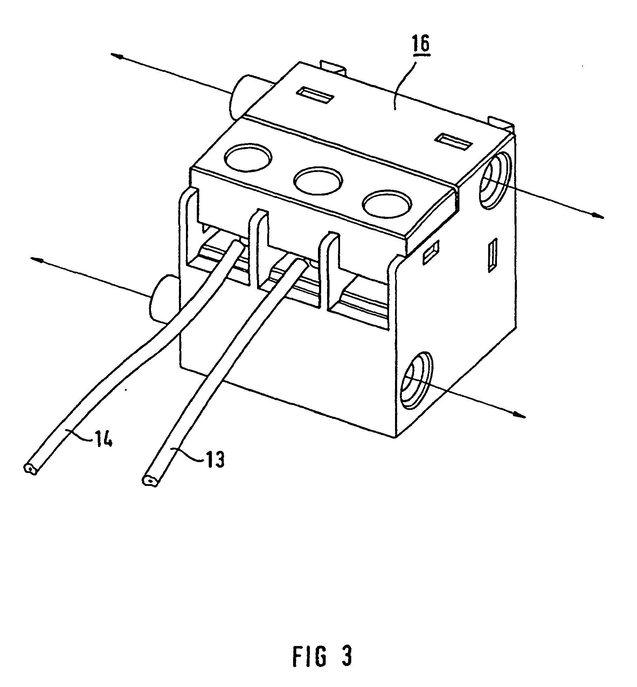

FIG 3 zeigt einen Anschluß- und Verteilbaustein 16 zum Anschluß von einem Neutral- 13 und einem Schutzleiter 14, der prinzipiell genauso aufgebaut ist wie der Anschluß- und Verteilbaustein 16 gemäß FIG 2. Die Verteilerschienen können dem Anwendungsfall entsprechend in ihrer Länge angepaßt werden.

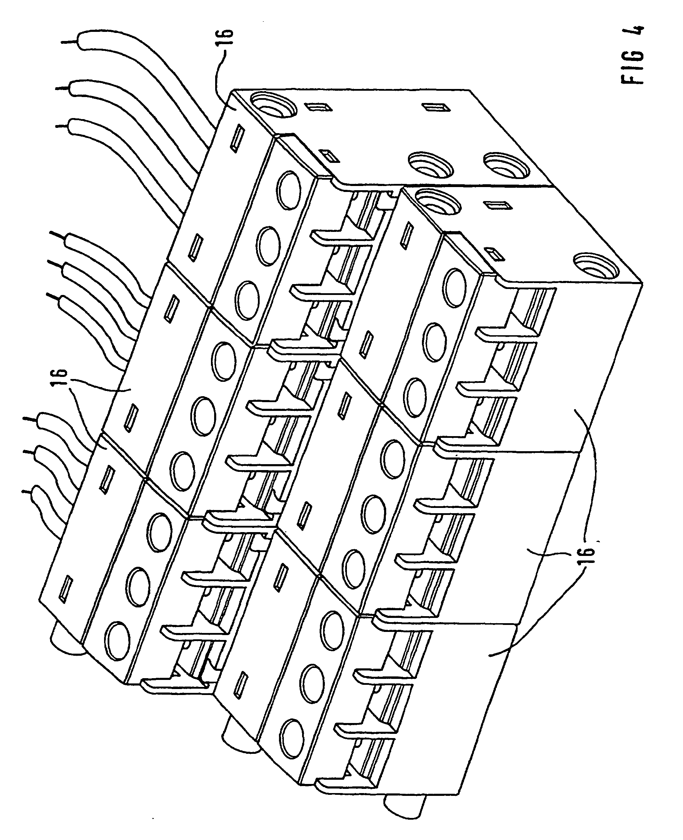

In FIG 4 ist ein aus mehreren Anschluß- und Verteilbausteinen 16 für die drei Anschlußleitungen 12 einerseits sowie für Neutral- 13 und Schutzleiter 14 andererseits modulartig aufgebauter Block dargestellt, der die entsprechenden Verteilerschienen enthält.

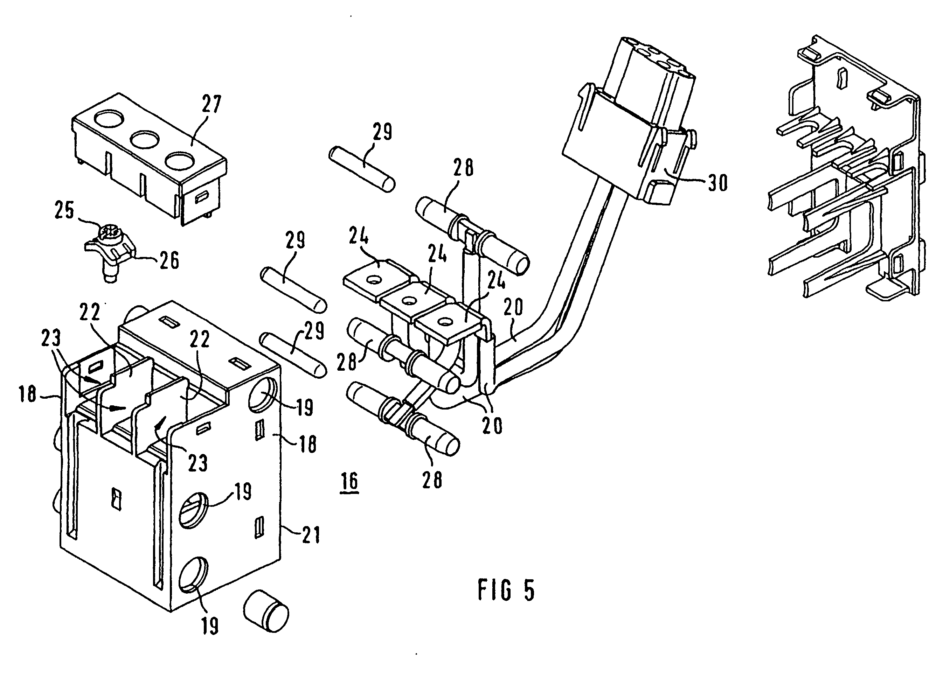

FIG 5 zeigt in einer Explosionsdarstellung den grundsätzlichen Aufbau eines Anschluß- und Verteilerbausteins 16. In einem Gehäuse 21 sind durch Seiten- 18 und Trennwände 22 drei Kammern 23 zur Aufnahme von drei Anschlußklemmen gebildet, die jeweils aus einer Anschlußplatte 24, einer Anschlußschraube 25 und einer Anschlußscheibe 26 bestehen. Die Berührungssicherheit wird durch eine die Kammern 23 abdeckende, auf das Gehäuse 21 aufsteckbare Schutzkappe 27 gewährleistet. An jeder Anschlußplatte 24 ist ein von Seitenwand 18 zu Seitenwand 18 reichender, d.h. querverlaufender Verteilschienen-Abschnitt 28 angeschlossen, der über eine Öffnung 19 in der Seitenwand 18 bedarfsweise mit einem Verteilschienenabschnitt 28 eines danebenliegenden Anschluß- und Verteilbausteins 16 über geeignete Steckelemente 29 elektrisch verbindbar ist.

Auf diese Weise kann modulartig ein Energiebus mit drei durchgehenden Verteilerschienen aufgebaut werden. Außerdem ist an jeder Anschlußplatte 24 eine Verbindungsleitung 20 zur elektrischen Verbindung mit den Anschlußklemmen des jeweils zugeordneten Schaltgeräts angeschlossen. Der modulartige Aufbau des Energiebusses bietet den Vorteil einer dem Anwendungsfall entsprechenden Anpassung, wobei es genügt, die einspeisende Energieleitung 11 nur an einen Verteilschienenabschnitt 28 über die Anschlußklemmen eines der miteinander verbundenen Anschluß- und Verteilbausteine 16 anzuschließen. Wie FIG 5 zeigt, kann der Anschluß der Verbindungsleitungen 20 an das Schaltgerät 10 über einen Stecker 30 erfolgen.

Obwohl die vorliegende Erfindung unter Bezugnahme auf die in der beigefügten Zeichnung dargestellte Ausführungsform erläutert ist, sollte berücksichtigt werden, daß damit nicht beabsichtigt ist, die Erfindung nur auf die dargestellte Ausführungsform zu beschränken, sondern alle möglichen Änderungen, Modifizierungen und äquivalente Anordnungen, soweit sie vom Inhalt der Patentansprüche gedeckt sind, einzuschließen.

## Patentansprüche

1. Schaltgerätesystem mit mindestens zwei Schaltgeräten (10) zum Betrieb über dieselbe Energieeinspeisung, wobei jedem Schaltgerät (10) ein Anschluss- und Verteilbaustein (16) zugeordnet ist, der jeweils wenigstens einen Verteilschienen-Abschnitt (28) aufweist, und wobei die Verteilschienen-Abschnitte (28) der Anschluss- und Verteilerbausteine (16) miteinander zu durchgehenden Verteilerschienen verbindbar sind, **dadurch gekennzeichnet, dass** jedem Vorteilschienen-Abschnitt (28) eine Anschlussklemmen (24, 25, 26) zugehört, über die das zugehörige Schaltgerät (10) mit der Energieeinspeisung elektrisch verbindbar ist, wobei an den Anschlussklemmen (24, 25, 26) jeweils eine Verbindungsleitung (20) zur elektrischen Verbindung mit einer Anschlussklemme des zugeordneten Schaltgeräts (10) angeschlossen ist.

2. Schaltgerätesystem nach Anspruch 1, **dadurch gekennzeichnet, dass** jeder Verteilschienen-Abschnitt (28) mit mindestens einer Anschlussklemme (24, 25 oder 26) des Anschluss- und Verteilbausteins (16) elektrisch verbunden ist.

3. Schaltgerätesystem nach Anspruch 1 oder 2, **dadurch gekennzeichnet, dass** der Anschluss- und Verteilbaustein (16) dreiphasig mit drei Anschlussklemmen (24, 25, 26) und drei verteilschienen-Abschnitten (28) zum Anschluss an ein Drehstromsystem ausgeführt ist.

4. Schaltgerätesystem nach einem der oben genannten Ansprüche, **dadurch gekennzeichnet, dass** die elektrischen Verbindungen der Verteilschienen-Abschnitte (28) als Steckverbindungen ausgeführt sind.

5. Schaltgerätesystem nach einem der oben genannten Ansprüche, **dadurch gekennzeichnet, dass** die durchgehende Verteilerschienen bildenden Anschluss- und Verteilbausteine (16) an die Schaltgeräte (10) ankoppelbar sind.

## Claims

1. Switchgear system with at least two switching devices (10) for operation via the same energy feed, with each switching device (10) being assigned a connection and distribution module (16), which features at least one distribution bus section (28) in each case, and with the distribution bus sections (28) of the connection and distribution modules (16) being able to be connected to each other to form continuous distribution buses, **characterized in that** a connecting terminal (24, 25, 26) belongs to each distribution bus section (28), via which the associated switching device (10) can be electrically connected to the energy feed, with one connecting lead (20) for electrical connection with a connecting terminal of the assigned switching device (10) being connected to the connection terminals (24, 25, 26) in each case (10).

2. Switchgear system in accordance with claim 1, **characterized in that** each distribution bus section (28) is electrically connected to at least one connecting terminal (24, 25 or 26) of the connection and distribution module (16).

3. Switchgear system in accordance with claim 1 or 2, **characterized in that** the connection and distribution module (16) is embodied as a three-phase unit with three connection terminals (24, 25, 26) and three distribution bus sections (28) for connection to an alternating current system.

4. Switchgear system in accordance with one of the above claims, **characterized in that** the electrical connections of the distribution bus sections (28) are embodied as plug-in connections.

5. Switchgear system in accordance with one of the above claims, **characterized in that** the connection and distribution modules (16) forming the continuous distribution bus (16) are able to be linked to the switching devices (10).

## Revendications

1. Système d'appareillage électrique de commutation comprenant au moins deux appareils électriques de commutation (10) destinés à fonctionner par l'intermédiaire de la même alimentation en énergie, à chaque appareil électrique de commutation (10) étant associé un module de connexion et de distribution (16) qui comporte respectivement au moins un tronçon (28) de barre de distribution ou de barre omnibus, et les tronçons (28) de barre omnibus des modules de connexion et de distribution (16) pouvant être reliés mutuellement en des barres omnibus continues, **caractérisé en ce qu'**à chaque tronçon (28) de barre omnibus est affectée une borne de connexion (24, 25, 26) par l'intermédiaire de laquelle l'appareil électrique de commutation (10) associé peut être raccordé électriquement à l'alimentation en énergie, et à chacune des bornes de connexion (24, 25, 26) est branché respectivement un conducteur de liaison (20) pour assurer la liaison électrique avec une borne de connexion de l'appareil électrique de commutation (10) associé.

2. Système d'appareillage électrique de commutation selon la revendication 1, **caractérisé en ce que** chaque tronçon (28) de barre omnibus est relié électriquement à au moins une borne de connexion (24, 25 ou 26) du module de connexion et de distribution (16).

3. Système d'appareillage électrique de commutation selon la revendication 1 ou 2, **caractérisé en ce que** le module de connexion et de distribution (16) est d'une configuration triphasée et comprend trois bornes de connexion (24, 25, 26) et trois tronçons (28) de barre omnibus pour le raccordement à un système de courant triphasé.

4. Système d'appareillage électrique de commutation selon l'une des revendications précédentes, **caractérisé en ce que** les liaisons de connexion électrique des tronçons (28) de barre omnibus sont réalisées en tant que connexions enfichables.

5. Système d'appareillage électrique de commutation selon l'une des revendications précédentes, **caractérisé en ce que** les modules de connexion et de distribution (16) formant des barres omnibus continues, peuvent être accouplés aux appareils électriques de commutation (10).
